# EUROPEAN PATENT SPECIFICATION

(11) **EP 0 624 464 B1**
(45) Date of publication and mention of the grant of the patent: **27.08.1997**
(21) Application number: 94303290.4
(22) Date of filing: 06.05.1994
(51) Int. Cl.: B32B 27/08, C08J 7/04

(54) **Barrier film for packaging**
Sperrfilm für Verpackungen
Feuille barrière pour emballage

(30) Priority: 14.05.1993 US 62378; 20.09.1993 US 124120; 20.09.1993 US 124090
(43) Date of publication of application: 17.11.1994
(73) Proprietor: DOW CORNING CORPORATION, Midland Michigan 48686-0994 (US)
(72) Inventor: Lee, Chi-Long, Midland, Michigan (US); Yeh, Ming-Hsiung, Midland, Michigan (US)
(74) Representative: Vandamme, Luc Johan Roger

(56) References cited:
- EP-A- 0 143 994
- EP-A- 0 392 115
- WO-A-89/00501

## Description

This invention relates to multi-layer composite films for applications requiring low oxygen permeability.

Packages allowing significant penetration of oxygen or other gases are undesirable where gas transmission contributes to the degradation or decay of the packaged product. For example, the development of packages having low oxygen transmission rates, i.e., high oxygen barrier properties, has long been a desirable objective in the food packaging industry, because low gas permeability food packages increase the shelf life of the packaged food products.

The film of the present invention can be used in any food package, and may also be used on the interior or exterior of a food packaging having a plastic or cardboard structural layer. Packages having low oxygen transmission rates also have utility for packaging other oxygen sensitive materials, such as oxygen activated sealants. Longer shelf life of the product increases inventory efficiency for distributors and reduces the likelihood that the consumer will accidently purchase and use a contaminated or unsatisfactory product.

For a plastic film to be qualified for food packaging applications, the film, has to have low oxygen permeability not only at low relative humidity, but also at high relative humidity since the packed food may be stored in either environment. Unfortunately, most of the commercially available plastic film cannot meet these two requirements simultaneously. For example, polyvinylalcohol has very low oxygen permeability at 0% relative humidity but high oxygen permeability when the relative humidity exceeds 70%. On the other hand, the oxygen permeability of polyolefins such as polyethylene and polypropylene are independent of relative humidity, but have oxygen permeability which is too high for food packaging applications. The ideal film will have both low oxygen permeability and insensitivity to relative humidity.

The present invention solves these problems by providing the art with a multi-layer composite of silicone treated plastic film that exhibits excellent low gas transmission characteristics at both 0% and 85% relative humidity. The resulting films are transparent, flexible and creasable and will not crack when bent and may be mounted on to the interior or exterior of a food package having a cardboard or plastic structural layer.

The present invention discloses a composition and a method of preparation of multi-layer composite films comprising a core layer of very low gas transmission material, two intermediate layers sandwiching the core layer and two outer layers sandwiching the two intermediate layers. The core layer provides an excellent gas barrier property, whereas the intermediate and outer layers protect the core layer so that the gas barrier characteristics of the resulting multi-layer composite film becomes insensitive to moisture.

U.S. Patents 5,077,l35 and 5,096,738 to Wyman disclose a method of imbuing a single polymer film with gas impermeable surface characteristics by cross-linking a specific silane compound while also imparting physical adsorption adherence to the film and coating thickness to yield gas and related barrier characteristics. The claimed invention, however, is distinguishable from the 'l35 and '738 patents because it provides a composition and method for use in composite films, rather than a single polymer film.

EP-A-0143994 discloses a multi-layer composite film comprising a plastic substrate, a layer of silicone rubber, a layer of an ethylene-vinyl alcohol copolymer and a layer of a silicone rubber
Figure 1 is a cross-sectional view of a preferred embodiment of the invention showing a C/B/A/B/C configuration of a multi-layer composite film;
Figure 2 is a cross-sectional view of the first alternate embodiment of the invention of Figure l showing a C/B/A/D/B/C configuration;
Figure 3 is a cross-sectional view of the second alternate embodiment of the invention of Figure 1 showing a B/C/A/C/B configuration; and
Figure 4 is a cross-sectional view of the third alternate embodiment of the invention of Figure 1 showing a B/C/A/B/C configuration.

In the following embodiments and examples, Layer A is a core layer containing a O₂ or CO₂ barrier material, such as polyvinylalcohol (PVOH), well known in the art to have low oxygen transmission characteristics. The core layer can be between 2 and 25 micrometers thick and is preferably 7 micrometers thick .

Layers B function as substrates and are either intermediate or outer layers depending on the configuration of the multi-layer film. Layers B are a protective plastic material whose O₂ and CO₂ permeability is independent of the relative humidity of the environment. The plastic material may be a commercially available polyolefin, such as polyethylene, polypropylene or polyethyleneterephthalate or a polyester, such as MYLAR® available from DuPont, (Wilmington, Delaware). Layers B may be any thickness, but will likely be at least 25 micrometers thick.

Layers C are either outer or intermediate layers depending on the configuration of the multi-layer film. The Layers C contain a protective material which retains excellent O₂ and CO₂ barrier properties at high relative humidity. Outer layers C are silicone resin derived from a silane solution of either (1) or (2), where:
(1) 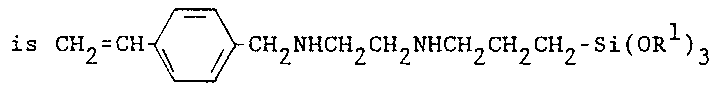 (i.e., N-2-(vinylbenzylamino)-ethyl-3-aminopropyltrimethoxysilane) or 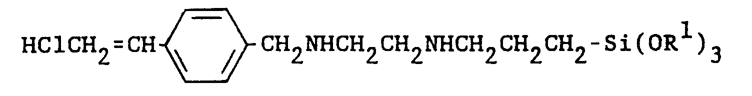 (i.e., N-2-(vinylbenzylamino)-ethyl-3-aminopropyltrimethoxysilane monohydrogen chloride) in a water/alcohol mixture and R¹ is an alkyl radical of from 1-4 carbon atoms inclusive;
(2) is a silane solution derived from the following reactants:
   (a) a silane having the general formula RSi(OR¹)₃, where R is a methyl or phenyl group and where R¹ is an alkyl radical of from 1 to 4 carbon atoms inclusive;
   (b) a solvent, such as an alcohol or ketone; and
   (c) a silane having the general formula R²Si(OR³)₃, where R³ is an alkyl radical of from 1 to 4 carbon atoms inclusive and R² is selected from
      (i) R⁴HN(CH₂)ₐ-, where R⁴ is a hydrogen atom or an alkyl radical of from 1 to 4 carbon atoms inclusive and a is an integer between 3 and 8 inclusive; and
      (ii) H₂N(CH₂)_{b}NH(CH₂)_{c}-, where b is an integer between 2 and 8 inclusive and c is an integer between 3 and 8 inclusive; and
(3) is a silane solution derived from a mixture of the following reactants:
   (a) a silane having the formula: 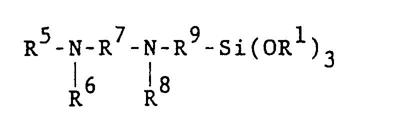 where:
      R¹ is a hydrocarbon radical having from one to four carbon atoms inclusive,
      R⁵, R⁶, R⁸ are selected from hydrogen atom, methyl or ethyl radicals and at least one of R⁵, R⁶ or R⁸ is a hydrogen atom,
      R⁷ is a hydrocarbon radical having from two to four carbon atoms inclusive,
      R⁹ is a hydrocarbon radical having from three to six carbon atoms inclusive,
   (b) an acrylate individually selected from: 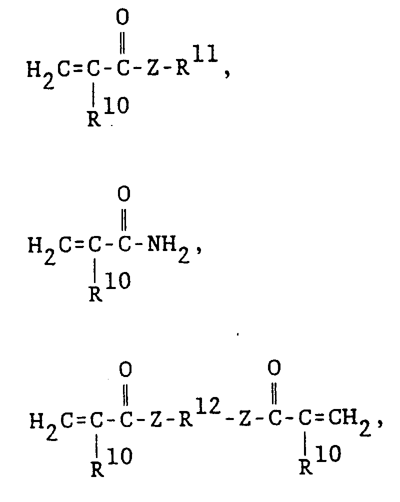 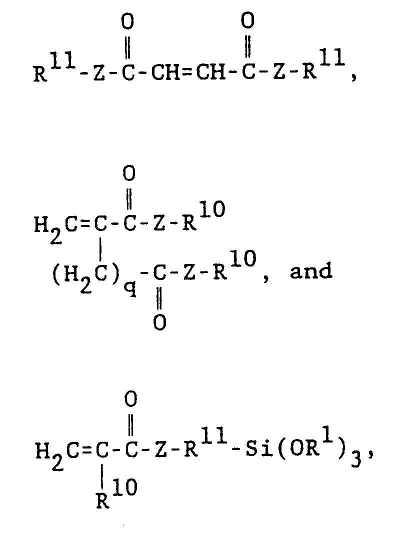 where:
      R¹ is as defined above,
      R¹⁰ is a hydrogen atom or methyl group,
      R¹¹ is an alkyl or alkenyl group,
      R¹² is an alkyl group, an alkenyl group or a -[(CH₂)ₙ-O]ₓ-(H₂C)ₙ group, where n is from 2 to 4 and x is from 1 to 6,
      q is 1 or 0, and
      Z is an oxygen, NH, NR¹ or NR¹¹, where R¹ is a hydrocarbon radical having from one to four carbon atoms inclusive and R¹¹ is an alkyl or alkenyl group; and
   (c) a solvent, such as methanol, ethanol, isopropanol and a mixture thereof; and optionally,
   (d) an additive selected from Si(OR¹)₄ or a partial hydrolyzate thereof and R¹¹-Si(OR¹)₃, where R¹¹ is an alkyl or alkenyl group and R¹ is a hydrocarbon radical having from one to four carbon atoms inclusive.

The silane solution (1) is coated on the substrate, dried to remove excess solvent and then cured to the substrate with a peroxide treatment or electron beam irradiation. The electron beam irradiation may take place at 0.04 MJ/kg (4 megarads). Further explanation of the electron beam irradiation process for curing silane solution (1) is disclosed in the '135 and '738 patents above. The silane solution (1) becomes a silicone resin on curing. The concentration of CH₂=CHC₆H₄CH₂NHCH₂CH₂NHCH₂CH₂CH₂-Si(OR¹)₃ or HClCH₂=CHC₆H₄CH₂NHCH₂CH₂NHCH₂CH₂CH₂-Si(OR¹)₃ in the methanol and water solution is in the range of 2% to 40%, where the ratio of methanol to water in the methanol/water solution is between 6 to 1 and 100 to 1.

The concentration of solvent in silane solution (2) is in the range of 0 to 98% by weight, where the ratio of RSi(OR¹)₃ to R²Si(OR³)₃ is between 10 and 0.1. Water may be added to the silane solution (2). The silane solution (2) becomes a silicone resin on curing, either by drying or under heat in an oven. Layers C formed from silane solutions (1) or (2) may be between 0.5 and 5 micrometers thick and are preferably 2 micrometers thick.

Silane solution (3) is prepared by initially mixing the silane component (a) with the acrylate component (b) to form a silane mixture. The ratio of silane component (a) to acrylate component (b) can range from 1:0 to 1:1. The silane mixture may constitute up to 100 percent of the silane solution, but it is preferred that the silane mixture constitute 10 percent of the silane solution by weight.

To this silane mixture is added an arbitrary amount of solvent, which may be methanol, ethanol, isopropanol or mixtures thereof. The amount of solvent added to the silane mixture can range from 1 percent to 99 percent of the total silane solution by weight, but is preferred to be about 80 percent by weight of the silane solution (3). After adding the solvent, water is added (up to 80 percent by weight of the silane solution (3), though 8 percent is preferred). Optionally, additive (d) may be added, which may comprise up to 50 percent by weight of the silane mixture. By partial hydrolyzate of Si(OR¹)₄, it is meant that portion of Si(OR¹)₄ in a solution which hydrolyzes at room temperature. Once silane solution (3) is prepared, it is simply coated onto the layer B and air or oven dried, as more fully described herein.

Silane solution (3), when applied to a plastic substrate, has also been found to have excellent flavor/aroma barrier characteristics. The flavor/aroma barrier characteristics of silane solution (3) yield low flavor/aroma transmission rates in particular.

The packaging industry has long searched for a packaging film which alone can serve as a barrier to flavors and aromas. Flavor and aroma barrier films generally serve two different purposes. First, the films prevent odors from the environment from contaminating the packaged material. This is particularly important where packaged food products are brought into an odor filled environment, because without such barrier protection, the food may absorb the unpleasant odors. Second, the barrier films prevent contamination of the environment from the packaged material. In other words, materials with unpleasant odors will not pollute the environment surrounding the package. Thus, foods with strong or unpleasant odors may be stocked in a grocery store without regard to producing an unpleasant shopping atmosphere. Preventing flavor or aroma contamination of packaged goods is particularly important in the food and pharmaceutical industries. The composite films of the present invention also provide an extremely efficient, cost effective flavor/aroma barrier which can be used in a variety of packaging end uses.

The adhesive Layer D is preferably an acid or acid anhydride-modified polymer which can permanently bond the core layer A to the protective layers B or C. Typical adhesives are RA-1753, made by Monsanto Plastics & Resins (St. Louis, Mo.) and CXA-E162 produced by DuPont (Wilmington, Del.).

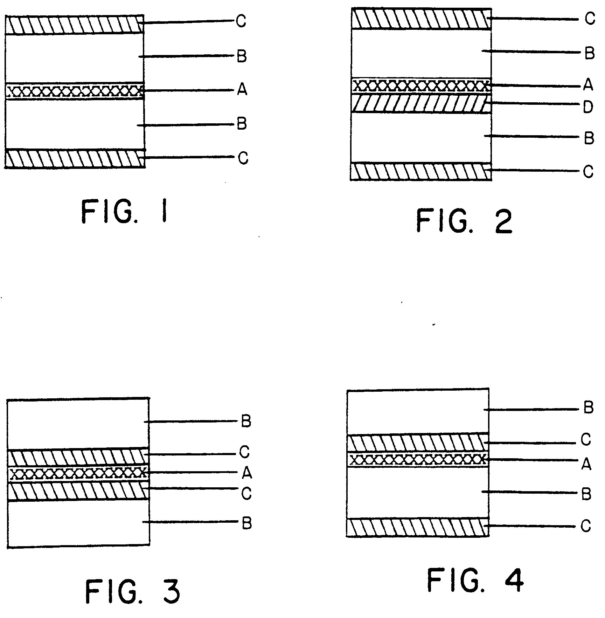

Referring specifically to Figure 1, a schematic cross-section of the preferred embodiment of the multi-layer composite film of the invention is shown. The film configuration is generalized by the structure C/B/A/B/C. The preferred embodiment of the invention having a C/B/A/B/C composite configuration may be prepared by coating the first substrate on one side with a PVOH solution, then air drying at room temperature to form a B/A 2-layer film. The first substrate may be corona treated prior to coating. The corona treatment may be done on a Model PS 10, manufactured by Corotec Corporation, Collinsville, CT. The coated first substrate could also be oven dried.

A second substrate is laminated on top of the core layer/first substrate film with the core layer surface of the first substrate mating with the second substrate. The second substrate could also be corona treated prior to lamination.

Alternately, the second substrate could also be coated with a PVOH solution in the manner described above for the first substrate prior to lamination to the first substrate. The first and second substrates are positioned so the PVOH layers of the first and second substrates face each other during lamination.

The lamination for either method can be done by a Cord/Guard Model 6100 Laminator at 325°F (162.8°C.). The multi-layer film thus has a core layer (A) of oxygen barrier material such as PVOH and two intermediate layers (B) of substrate.

The surface of the multi-layer B/A/B film is coated on both sides with a silane solution which may be either silane solution (1), silane solution (2) or silane solution (3). The multi-layer B/A/B film could also be corona treated on both sides prior to coating with the silane solution. If the multi-layer B/A/B film is coated with silane solution (1), then silane solution (1) is cured to the substrate with a peroxide treatment or electron beam irradiation to form a silicone resin for outer layers (C). The cure process by peroxide treatment or electron beam irradiation is fully disclosed and described in the '135 and '738 patents.

If the multi-layer B/A/B film is coated with silane solution (2) or silane solution (3), then the particular silane solution is dried in air at room temperature to form a silicone resin resulting in outer layers (C). The silane solution (2) or (3) can also be oven dried to form the silicon resin. The resulting C/B/A/B/C five-layer composite film thus has a core layer of PVOH (A), two intermediate layers of a substrate (B) and two outer layers of silicone resin (C).

Figure 2 shows a first alternate embodiment of the invention, which includes adhesive layer D. The composite film configuration can be generalized by the structure C/B/A/D/B/C.

The first alternate embodiment of the invention may be prepared by coating a first substrate on one side with a PVOH solution and air drying at room temperature to give an A/B 2-layer film. The first substrate may also be corona treated prior coating with the PVOH solution. The coated first substrate could also be oven dried. A second substrate, with an adhesive on one side, is corona treated and laminated on top of the core layer/first substrate film with the core layer surface facing the adhesive. The lamination could be done by a Cord/Guard Model 6100 Laminator at 325°F (162.8°C.). The multi-layer B/A/D/B film thus has a core layer (A) of oxygen barrier material such as PVOH, an adhesive layer (D) and two intermediate layers (B) of substrate. The surface of the multi-layer B/A/D/B film is then coated on both sides with a silane solution which may be either silane solution (1), silane solution (2) or silane solution (3). The multi-layer B/A/D/B film could also be corona treated prior to coating with the silane solution.

If the multi-layer B/A/B film is coated with silane solution (1), then silane solution (1) is cured to the substrate with a peroxide treatment or electron beam irradiation. If the multi-layer B/A/D/B film is coated with silane solution (2) or (3), then the particular silane solution is dried to form a silicone resin resulting in outer layers (C). Drying can take place in air at room temperature or in an oven. The resulting C/B/A/D/B/C six-layer composite film thus has a core layer of PVOH (A), an adhesive layer (D), two intermediate layers of a substrate (B) and two outer layers of silicone resin (C).

Figure 3 shows a second alternate embodiment of the invention. The composite film configuration can be generalized by the structure B/C/A/C/B. The second alternate embodiment can be prepared by coating first and second substrates (outer layers B) with a silane solution which may be either silane solution (1), (2) or (3). The first and second substrates could also be corona treated prior to coating with the silane solution.

If the substrates are coated with silane solution (1), then silane solution (1) is cured to the substrate with a peroxide treatment or electron beam irradiation to form a silicone resin for intermediate layers (C). If the substrates are coated with silane solution (2) or (3), then the coated film is allowed to cure to a silicone resin at room temperature to form intermediate layers (C). The film could have also been oven dried. This process results in two films having B/C configurations.

The first substrate is then coated on a second side with a solution of PVOH and air dried at room temperature. The first substrate could have been corona treated prior to coating with PVOH solution. The first substrate may have also been oven dried. The second substrate is then laminated to the first substrate, so the silicone resin side of the second substrate mates with the PVOH treated portion of the first substrate.

Alternately, the second substrate could also be coated with a PVOH solution over the silicon resin in a manner similar to the first substrate. The first and second substrates are positioned so the PVOH layers of the first and second substrates face each other during lamination.

The resulting multi-layer B/C/A/C/B composite film from either method consists of two outer layers of substrate (B), two intermediate layers of silicone resin (C) and a core layer of PVOH (A).

Figure 4 shows a third alternate embodiment of the invention. The composite film configuration can be generalized by the structure B/C/A/B/C. To prepare the third alternate embodiment, first and second substrates of at least 25 micro-meters thickness each are coated on a first side with a silane solution which may be either silane solution (1), (2) or (3). The first and second substrates may be corona treated prior to coating with the silane solution.

If the substrates are coated with silane solution (1), then silane solution (1) is cured to the substrate with a peroxide treatment or electron beam irradiation to form a silicone resin. If the substrates are coated with silane solution (2) or (3), then the particular silane solution (2) is allowed to cure to form a silicone resin at room temperature to give two B/C 2-layer films.

The first substrate is then coated on a second side with a PVOH solution of water or water/alcohol mixture, to give an A/B/C type film and air dried at room temperature. The second substrate is then coated on the silicone resin side with a PVOH solution of water or water/alcohol mixture and air dried at room temperature to give a B/C/A 3-layer film. The first and second substrates may have also been corona treated prior to coating with the PVOH solution.

The first and second substrates are then laminated so that PVOH of the first substrate mate with the PVOH of the second substrate, forming a B/C/A/B/C type film having a substrate layer (Layer B), a silicone resin layer (Layer C), a PVOH core layer, another substrate layer (Layer B) and a silicone resin layer (Layer C).

The measurements of oxygen permeability for each of the composite films discussed in the following examples were made using pure oxygen on a MOCON OX-TRAN 100A tester according to ASTM F1307-90 at 32.5°C. "Dry" readings were taken in an environment where the relative humidity was 0 percent and the "wet" readings were taken in an environment where the relative humidity was 85 percent or greater. Corona treatment of the substrates was done by passing the substrate under a Tesla Coil for approximately one-half second. All films produced below are transparent, flexible and creasable, but will not crack when bent.

### Example I

To prepare a composite C/B/A/B/C type film, a first low density polyethylene (LDPE) substrate of 100 micrometers thickness was corona treated and coated on one side with a 10% PVOH solution of water/methanol mixture, where the ratio of water to methanol was 9:1 by weight. The first substrate was then air dried at room temperature. Coating thickness of the PVOH was estimated to be 7 micrometers. A second LDPE substrate, also of 100 micrometers thickness was corona treated and laminated on top of the PVOH/LDPE film with the PVOH surface facing the first substrate to give a LDPE/PVOH/LDPE 3-layer film. The lamination was conducted by a Cord/Guard Model 6100 Laminator at 325°F (162.8°C). This B/A/B type three-layer film acted as a control and showed a dry oxygen transmission rate of 7.40 ml/m²/day and a wet oxygen transmission rate of 28.00 ml/m²/day.

A second B/A/B type three-layer film was prepared in the same manner as the B/A/B type three-layer control film described above. The surface of the second three-layer film was then corona treated on both sides and coated on both sides with each of the five silane solutions described below. Cure of the coated silane solution took place in air at room temperature to form a silicone resin. The coating thickness of both silicone layers was estimated to be 2 micrometers. The resulting C/B/A/B/C type five-layer composite film thus had a core layer of PVOH, two intermediate layers of LDPE and two outer layers of silicone resin.

The first silane solution consisted of 25 grams HClCH₂=CHC₆H₄CH₂NHCH₂CH₂NHCH₂CH₂CH₂-Si(OMe)₃ solution (40% by weight in methanol), 75 grams methanol and 4 grams water and was aged for 16 hours prior to coating. The excess solvent was removed by drying the treated film for 2 hours at 25°C. The cure of the silane solution took place by electron beam irradiation, which consisted of exposure of the film to 4 megarads of radiation. The resulting composite C/B/A/B/C five-layer film achieved excellent oxygen barrier characteristics, showing a dry oxygen transmission rate of 0.20 ml/m²/day and a wet oxygen transmission rate of 0.20 ml/m²/day.

The second silane solution consisted of 25 grams HClCH₂=CHC₆H₄CH₂NHCH₂CH₂NHCH₂CH₂CH₂-Si(OMe)₃ solution (40% by weight in methanol), 75 grams methanol and 4 grams water and was aged for 16 hours prior to coating. The coated film was not subjected to electron beam irradiation after coating, but was allowed to cure in the air. The resulting composite C/B/A/B/C five-layer film still achieved excellent oxygen barrier characteristics, showing a dry oxygen transmission rate of 0.65 ml/m²/day and a wet oxygen transmission rate of 2.9 ml/m²/day although these values are slightly higher than the case where the film has two cured Layers C.

The third silane solution consisted of 5 grams methyltrimethoxysilane, 5 grams 3-amino-propyltriethoxy silane, 90 grams methylethyl ketone (MEK) and 4 grams water. The resulting composite C/B/A/B/C five-layer film achieved excellent oxygen barrier characteristics, showing a dry oxygen transmission rate of 0.40 ml/m²/day and a wet oxygen transmission rate of 2.20 ml/m²/day. Similar results were achieved even when this method was repeated and the thickness of the first LDPE substrate was reduced from 100 to 40 micrometers. The C/B/A/B/C five-layer composite film where the first LDPE substrate was 40 micrometers thick showed a dry oxygen transmission rate of 0.20 ml/m²/day and a wet oxygen transmission rate of 2.70 ml/m²/day. The five-layer composite film where the thickness of both substrates was 100 micrometers also exhibited good CO₂ barrier properties as well, with a CO₂ transmission rate of 10 ml/m²/day at 23°C and 0 percent relative humidity.

The fourth silane solution consisted of 5 grams methyltrimethoxysilane, 5 grams 3-amino-propyltriethoxy silane, 90 grams methylethyl ketone (MEK), but no water was added to the silane solution. The resulting composite C/B/A/B/C five-layer film achieved excellent oxygen barrier characteristics, showing a dry oxygen transmission rate of 0.2 ml/m²/day and a wet oxygen transmission rate of 1.3 ml/m²/day.

The fifth silane solution consisted of 5 grams methyltrimethoxysilane, 5 grams phenyltriethoxy silane, 90 grams MEK and 4 grams water. The resulting C/B/A/B/C type five-layer composite film achieved excellent oxygen barrier characteristics, showing a dry oxygen transmission rate of 0.50 ml/m²/day and a wet transmission rate of 4.30 ml/m²/day.

The sixth silane solution consisted of a mixture of 10 grams of H₂N-CH₂CH₂-NH-CH₂-CH₂-CH₂-Si(OCH₃)₃ plus 2 grams of methyl acrylate (H₂C=CH-(C=O)-O-CH₃). To 10 grams of the resulting mixture were added 90 grams of isopropyl alcohol and 8 grams of water. The resulting C/B/A/B/C type five-layer composite film achieved excellent oxygen barrier characteristics, showing a dry oxygen transmission rate of 0.20 ml/m²/day and a wet transmission rate of 1.35 ml/m²/day.

Each of the five-layer composite silane treated films show significant decrease in oxygen permeability as compared to the three-layer B/A/B control film, thus improving the oxygen barrier characteristics by at least one order of magnitude. This is attributed to the presence of silicone resin Layer C, which protects the PVOH from water.

### Example II (Comparative)

Both sides of an LDPE substrate of 100 micrometers thickness were corona treated. The LDPE substrate was coated on both sides with a silane solution, consisting of 25 grams HClCH₂=CHC₆H₄CH₂NHCH₂CH₂NHCH₂CH₂CH₂-Si(OMe)₃ solution (40% by weight in methanol), 75 grams methanol and 4 grams water and aged for 16 hours prior to coating. The cure of the silane solution took place by electron beam irradiation after coating and the removal of solvent. After coating the film formed a three-layer film having two outer layers of silicone resin and a core layer of LDPE. Coating thickness of the silane layers were estimated to be between 1 and 2 micrometers each. The resulting three-layer composite film showed a dry oxygen transmission rate of 30 ml/m²/day and a wet oxygen transmission rate of over 2000 ml/m²/day. The difference between the 3-layer film described in this example and the 5-layer film described in Example I is the absence of a PVOH core layer in the former film. The former film not only gives higher dry oxygen transmission rate (by two orders of magnitude) but also shows drastic dependence on relative humidity (by another two orders of magnitude.) The superior oxygen barrier characteristics and humidity independent of oxygen permeability exhibited by the 5-layer film described in Example I is attributed to the combined presence of both silicone resin layer and the PVOH core layer.

### Example III

To prepare a composite C/B/A/D/B/C type film, a first LDPE substrate was corona treated and coated on one side with a 10% PVOH solution in water/methanol mixture, where the ratio of water to alcohol was 9:1 by weight. The substrate was dried in the air at room temperature to give a B/A type film. Coating thickness of the PVOH layer was estimated to be 6 micrometers. A second LDPE substrate, with RA-1753 adhesive on one side, was laminated on top of the PVOH/LDPE film with the PVOH surface facing the adhesive. This B/A/D/B type four-layer film acted as a control and showed a dry oxygen transmission rate of 2.10 ml/m²/day and a wet oxygen transmission rate of 62.00 ml/m²/day.

A second B/A/D/B four-layer film was prepared in the same manner as the B/A/D/B four-layer control film described above. The surface of the four-layer film was corona treated on both sides, then coated on both sides with a silane solution, consisting of 5 grams methyltrimethoxysilane, 5 grams 3-amino-propyltriethoxysilane, 90 grams MEK and 4 grams water. Coating thickness of the silane was estimated at 2 micrometers. Cure of the coated silane in air resulted in a silicone resin. The resulting C/B/A/D/B/C six-layer composite film thus had a core layer of PVOH, a layer of adhesive, two intermediate layers of LDPE and two outer layers of silicone resin.

The resulting six-layer composite film achieved excellent barrier characteristics, showing a dry oxygen transmission rate of 0.25 ml/m²/day and a wet oxygen transmission rate of 1.50 ml/m²/day. Similar results were achieved even when the first and second LDPE substrates were replaced with 50 micrometers thickness polypropylene substrates. Where the polypropylene substrates were treated to form a C/B/A/D/B/C six-layer composite film, a dry oxygen transmission rate of 0.30 ml/m²/day and a wet oxygen transmission rate of 1.70 ml/m²/day were obtained. These results showed a significant decrease in oxygen permeability over the four-layer control film, thus improving the barrier characteristics by an order of magnitude.

### Example IV

To prepare a B/C/A/C/B type composite film, first and second LDPE substrates of 100 micrometers thickness each were corona treated. Each LDPE substrate was coated on a first side with a silane solution. The first silane solution consisted of 5 grams methyltrimethoxysilane, 5 grams 3-aminopropyltriethoxy silane, 90 grams MEK and 4 grams water. Coating thickness of each silane layer was estimated to be between 1 and 2 micrometers. After coating each film was allowed to cure at room temperature to form a silicone resin. This process gave two B/C type two layer films.

The first LDPE substrate (B/C type two layer film) was then corona treated and coated on a first side over the silicone resin with a 10% PVOH solution in water/methanol mixture where the ratio of water to alcohol was 9:1 by weight. The LDPE substrate was then air dried at room temperature. Coating thickness of the PVOH was estimated to be 7 micrometers. The second LDPE substrate was then laminated to the first LDPE substrate, so the silane solution treated side of the second LDPE substrate mated with the PVOH treated portion of the first LDPE substrate. The resulting B/C/A/C/B type five-layer composite film consisted of two outer layers of LDPE, two intermediate layers of silicone resin derived from the silane solution and a core layer of PVOH. The resulting multi-layer film achieved excellent oxygen barrier characteristics, showing a dry oxygen transmission rate of 0.90 ml/m²/day and a wet oxygen transmission rate of 5.10 ml/m²/day.

The above process was repeated using a second silane solution which consisted of a mixture of 10 grams of H₂N-CH₂CH₂-NH-CH₂-CH₂-CH₂-Si(OCH₃)₃ plus 2 grams of methyl acrylate (H₂C=CH-(C=O)-O-CH₃). To 10 grams of the resulting mixture was added 90 grams of isopropyl alcohol and 8 grams of water. The resulting B/C/A/C/B type five-layer composite film achieved excellent oxygen barrier characteristics, showing a dry oxygen transmission rate of 0.15 ml/m²/day and a wet transmission rate of 1.15 ml/m²/day.

The process was again repeated using a third silane solution. It consisted of a mixture of 10 grams of H₂N-CH₂CH₂-NH-CH₂-CH₂-CH₂-Si(OCH₃)₃ plus 2 grams of methyl acrylate (H₂C=CH-(C=O)-O-CH₃). To 10 grams of the resulting mixture was added 90 grams of isopropyl alcohol, 2 grams of the additive polydiethoxysiloxane and 8 grams of water. The resulting B/C/A/C/B type five-layer composite film achieved excellent oxygen barrier characteristics, showing a dry oxygen transmission rate of 0.25 ml/m²/day and a wet transmission rate of 1.9 ml/m²/day.

### Example V

To prepare a B/C/A/B/C type composite film, first and second LDPE substrates of 100 micrometers thickness each were corona treated. Each LDPE substrate was coated on a first side with a silane solution, consisting of 5 grams methyltrimethoxysilane, 5 grams 3-amino-propyltriethoxy silane, 90 grams MEK and 4 grams water. Coating thickness of each silane layer was estimated to be between 1 and 2 micrometers. After coating the film was allowed to cure at room temperature to form a silicone resin, resulting in a B/C type two layer film.

The first LDPE substrate was corona treated and coated on a second side with a 5% PVOH solution in water/methanol mixture where the ratio of water to alcohol was 9:1 by weight and air dried at room temperature. Coating thickness of the PVOH was estimated to be 3.5 micrometers. The second LDPE substrate was then coated the silicone resin side with a 5% PVOH solution in water/methanol mixture where the ratio of water to alcohol was 9:1 by weight and air dried at room temperature. Coating thickness of the PVOH was estimated to be 3.5 micrometers.

Thereafter, the first and second substrates were laminated so that PVOH of the first substrate mated with the PVOH of the second substrate, forming a B/C/A/B/C type five-layer film having an LDPE layer, a silicone resin layer, a PVOH core layer, an LDPE layer and a silicone resin layer. The resulting multi-layer film achieved excellent oxygen barrier characteristics, showing a dry oxygen transmission rate of 0.40 ml/m²/day and a wet oxygen transmission rate of 1.20 ml/m²/day.

The above process was repeated using a second silane solution. It consisted of a mixture of 10 grams of H₂N-CH₂CH₂-NH-CH₂-CH₂-CH₂-Si(OCH₃)₃ plus 2 grams of methyl acrylate (H₂C=CH-(C=O)-O-CH₃). To 10 grams of the resulting mixture was added 90 grams of isopropyl alcohol and 8 grams of water. The resulting B/C/A/B/C type five-layer composite film achieved excellent oxygen barrier characteristics, showing a dry oxygen transmission rate of 0.25 ml/m²/day and a wet transmission rate of 1.55 ml/m²/day.

### Example VI

Both sides of an LDPE substrate of 100 micrometers thickness were corona treated. The LDPE substrate was coated on both sides with a silane solution, consisting of 5 grams methyltrimethoxysilane, 5 grams 3-amino-propyltriethoxy silane and 90 grams MEK and 4 grams water. After coating the film was allowed to cure at room temperature to form a three-layer film having two outer layers of silicone resin, and a core layer of LDPE. Coating thickness of the silane layers were estimated to be between 1 and 2 micrometers each. The resulting multi-layer composite film showed a dry oxygen transmission rate of 310 ml/m²/day and a wet oxygen transmission rate of 940 ml/m²/day. The high oxygen transmission can be attributed to the absence of PVOH core layer.

### Example VII

Both sides of an LDPE substrate of 100 micrometers thickness were corona treated. The LDPE substrate was coated on both sides with a silane solution, consisting of 5 grams methyltrimethoxysilane, 5 grams 3-amino-propyltriethoxy silane and 90 grams MEK. No water was added to the mixture. After coating the film was allowed to cure at room temperature to form a three-layer film having two outer layers of silicone resin and a core layer of LDPE. Coating thickness of the silane layers were estimated to be between 1 and 2 micrometers each. The silane bonded to and therefore "wetted" the surface of the LDPE substrate even though water was not added to the silane solution. The resulting multi-layer composite film showed a dry oxygen transmission rate of 600 ml/m²/day and a wet oxygen transmission rate of over 1040 ml/m²/day.

### Example VIII

Both sides of a MYLAR® substrate (a polyester film available from DuPont, Wilmington, Del.) of 75 micrometers thickness were corona treated. The MYLAR® substrate was coated on both sides with a silane solution, consisting of 5 grams methyltrimethoxysilane, 5 grams 3-amino-propyltriethoxy silane and 90 grams MEK and water. After coating the film was allowed to cure at room temperature to form a C/B/C three-layer film having two outer layers of silicone resin and a core layer of MYLAR®. Coating thickness of the silane layers were estimated to be between 1 and 2 micrometers each.

The silane bonded to and therefore "wetted" the surface of the MYLAR® substrate. Moreover, the resulting multi-layer film achieved reasonably good oxygen barrier characteristics considering no PVOH was present in the film. Observed was a dry oxygen transmission rate of 12 ml/m²/day which was about half uncoated MYLAR® which has a dry oxygen transmission rate of 26 ml/m²/day.

## Claims

1. A multi-layer composite film comprising
- a core layer (A) of low gas permeable polyvinyl alcohol
- two layers (B) of plastic substrate, disposed on either side of layer (A) and
- two layers (C) of a silicone resin disposed on one side of each of layers (B), wherein the silicone resin is derived from a silane solution selected from
- (1) 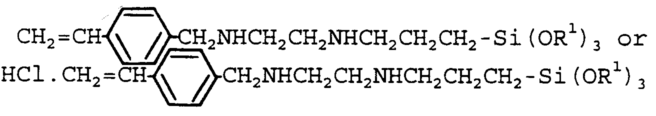 in a water/alcohol mixture, where R¹ is an alkyl radical of from 1 to 4 carbon atoms
- (2) the solution comprising (a) a silane having the general formula RSi(OR¹)₃, where R is methyl or phenyl and where R¹ is a defined above, (b) a solvent and (c) a silane having the general formula R²Si(OR³)₃, where R³ is an alkyl radical having from 1 to 4 carbon atoms and R² is selected from (i) R⁴HN(CH₂)ₐ-, where R⁴ is H or an alkyl radical of from 1 to 4 carbon atoms and a is an integer between 3 and 8 inclusive and (ii) H₂N(CH₂)_{b}NH(CH₂)_{c}-, where b is an integer between 2 and 8 inclusive and c is an integer between 3 and 8 inclusive and
- (3) the solution derived from the mixture of the following reactants:
(a) a silane of the formula 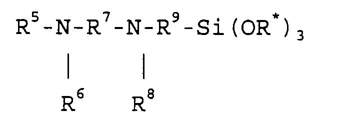 where R* is a hydrocarbon radical having from 1 to 4 carbon atoms, R⁵, R⁶ and R⁸ are selected from hydrogen, methyl and ethyl radicals, at least one of R⁵, R⁶ and R⁸ being H, R⁷ is a hydrocarbon radical having 2 to 4 carbon atoms inclusive and R⁹ is a hydrocarbon radical having from 3 to 6 carbon atoms inclusive,
(b) an acrylate individually selected from 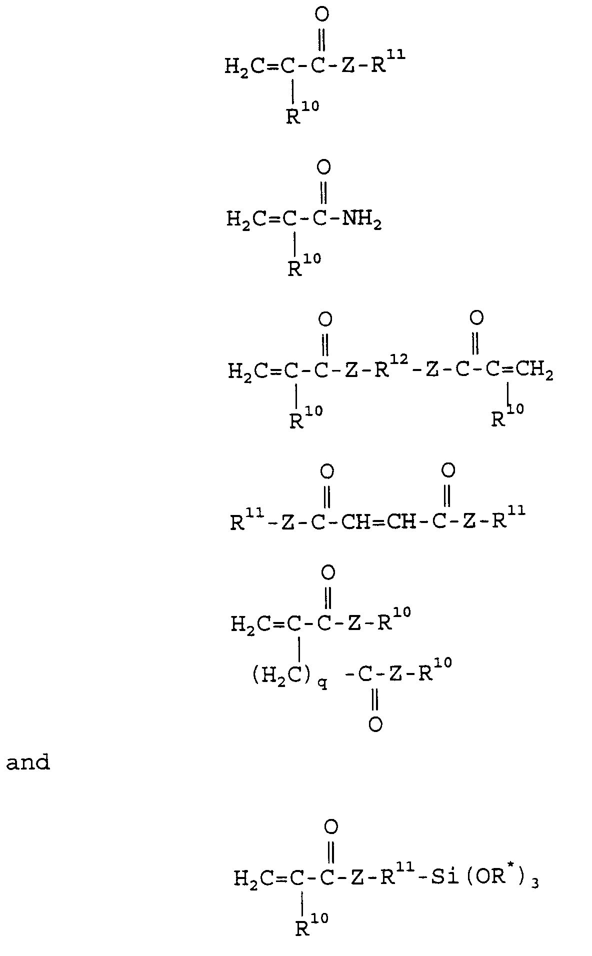 where
R* is as defined above,
R¹⁰ is a hydrogen atom or methyl group,
R¹¹ is an alkyl or alkenyl group,
R¹² is an alkyl group, an alkenyl group or a [(CH₂)ₙO]ₓ-(H₂C)ₙ group, where n is from 2 to 4 and x is from 1 to 6,
q is 1 or 0, and
Z is an oxygen, NH, NR* or NR¹¹, where R* and R¹¹ are as defined above,
(c) a solvent selected from methanol, ethanol, isopropanol and a mixture thereof and optionally
(d) an additive selected from Si(OR*)₄ or a partial hydrolyzate thereof and R¹¹-Si(OR*)₃, where R¹¹ and R* are as defined above.

2. A multi-layer composite film according to Claim 1, wherein the layers are in a sequence CBABC.

3. A multi-layer composite film according to Claim 2, wherein an adhesive layer (D) is present between layer (A) and one layer (B).

4. A multi-layer composite film according to Claim 1, wherein the layers are in a sequence BCACB.

5. A multi-layer composite film according to Claim 1, wherein the layers are in a sequence BCABC.

6. A multi-layer composite film according to any one of the preceding claims, wherein the solvent of silane solution (2) is selected from alcohol and ketone.

7. A multi-layer composite film according to any one of the preceding claims wherein the silane solution (2) includes water.

8. A multi-layer composite film according to any one of the preceding claims, wherein the first and second plastic substrates (B) are polyolefins.

9. A multi-layer composite film according to any one of the preceding claims, wherein said core layer is of a thickness in the range of 2 to 25 µm.

10. A multi-layer composite film according to any one of the preceding claims, wherein plastic substrates (B) each have a thickness of at least 25µm.

11. A multi-layer composite film according to any one of the preceding claim, wherein the silicone resin coating layers (C) have a thickness of in the range 0.5 to 5 µm.

12. A composite film having a layer (B) of a plastic substrate and a layer (C) of a silicone resin disposed on one side of the plastic substrate (B), wherein the silicone resin is derived from a silane solution (3) as defined in Claim 1.

13. A method of producing a multi-layer composite film according to Claim 2 or 3, comprising the steps of coating a first side of a first plastic substrate (B) with a core layer (A) or polyvinyl alcohol, then drying same;
disposing a second plastic substrate (B) on said core layer (A) on the coated side of said first plastic substrate (B) to form a three-layer film having first and second sides;
coating said first and second sides of said three-layer film with a silane solution as defined in Claim 1, in the presence of water; and
curing the silane solution to form a cured silicone resin coated multi-layer composite film.

14. A method according to Claim 13, comprising the additional step of exposing said first and second sides of said three-layer film to corona treatment prior to coating with said silane solution.

15. A method according to Claim 13 or 14, comprising the additional step of exposing said first side of said first plastic substrate (B) to corona treatment prior to coating said first plastic substrate with polyvinyl alcohol.

16. A method according to any one of Claims 13 to 15, wherein said second substrate is coated on a first side with a core layer of polyvinyl alcohol and said polyvinyl alcohol is dried and said coating occurs prior to disposing said second substrate on said core layer of said first substrate.

17. A method according to any one of Claims 13 to 16, comprising the additional step of drying said multi-layer composite film.

18. A method of producing a multi-layer composite film according to Claim 4, comprising the steps of
coating a first side of a first plastic substrate (B) with a layer of silane solution in the presence of water;
coating a first side of a second plastic substrate (B) with a layer of silane solution in the presence of water;
drying said first and second plastic substrate (B) to transform the silane solutions to silicone resins;
coating said first side of said first plastic substrate with polyvinyl alcohol to form a core layer on said first plastic substrate;
drying said first plastic substrate; and
bonding said first side of said second substrate to said core layer of said first substrate to form a multi-layer composite film.

19. A method of producing a multi-layer composite film according to Claim 5, comprising the steps of
coating a first layer of a first plastic substrate with a layer of silane solution in the presence of water;
coating a first side of a second plastic substrate with a layer of silane solution in the presence of water;
drying said first and second plastic substrates to transform the silane solution to a silicone resin;
coating a second side of said first substrate with polyvinyl alcohol;
drying said first and second substrates; and
laminating said first side of said second substrate to said second side of said first substrate to form a multi-layer composite film.

20. The use of a multi-layer composite film according to any one of claims 1 to 11 for food packaging.

21. The use of a multi-layer composite film according to any one of claims 1 to 11 for mounting on the interior or exterior of food packaging which has a cardboard of plastic structural layer.

22. The use of a multi-layer composite film according to any one of Claims 1 to 11 in combination with a plastic or cardboard structural layer.

23. The use of a multi-layer composite film according to any one of Claims 1 to 11, in the packaging of oxygen sensitive sealants.

24. The use of a composite film according to Claim 12 to provide flavor/aroma barrier characteristics.

25. A flavor and aroma barrier film comprising a composite film according to Claim 12.

## Patentansprüche

1. Mehrschichtiger Verbundfilm enthaltend:
- eine Kernschicht (A) aus einem Polyvinylalkohol mit niedriger Gasdurchlässigkeit
- zwei Schichten (B) aus einem Kunststoffsubstrat, die auf beiden Seiten der Schicht (A) angeordnet sind, und
- zwei Schichten (C) aus einem Siliconharz, die auf einer Seite jeder der Schichten (B) angeordnet sind, wobei das Siliconharz aus einer Silanlösung stammt, ausgewählt aus
(1) 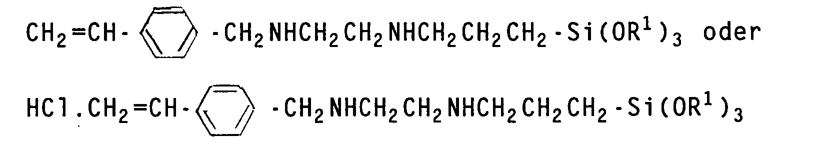 in einer Wasser-Alkohol-Mischung, worin R¹ ein Alkylrest mit 1-4 Kohlenstoffatomen ist,
(2) einer Lösung, die (a) ein Silan mit der allgemeinen Formel RSi(OR¹)₃, worin R Methyl oder Phenyl ist und R¹ wie oben definiert ist, (b) ein Lösungsmittel und (c) ein Silan mit der allgemeinen Formel R²Si(OR³)₃ enthält, worin R³ ein Alkylrest mit 1-4 Kohlenstoffatomen und R² ausgewählt ist aus (i) R⁴HN(CH₂)ₐ-, worin R⁴ H oder ein Alkylrest mit 1-4 Kohlenstoffatomen und a eine ganze Zahl zwischen 3 und 8 einschließlich ist, und (ii) H₂N(CH₂)_{b}NH(CH₂)_{c}-, worin b eine ganze Zahl zwischen 2 und 8 einschließlich und c eine ganze Zahl zwischen 3 und 8 einschließlich ist, und
(3) einer Lösung, die aus der Mischung der folgenden Reaktanten abgeleitet ist:
(a) einem Silan der Formel 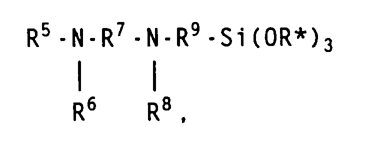 in der R* ein Kohlenwasserstoffrest mit 1-4 Kohlenstoffatomen ist, R⁵, R⁶ und R⁸ ausgewählt sind aus Wasserstoff, Methyl- und Ethylresten, wobei mindestens einer der R⁵-, R⁶- oder R⁸-Reste H ist, R⁷ ein Kohlenwasserstoffrest mit 2 bis einschließlich 4 Kohlenstoffatomen ist und R⁹ ein Kohlenwasserstoffrest mit 3 bis einschließlich 6 Kohlenstoffatomen ist,
(b) einem Acrylat, jeweils ausgewählt aus 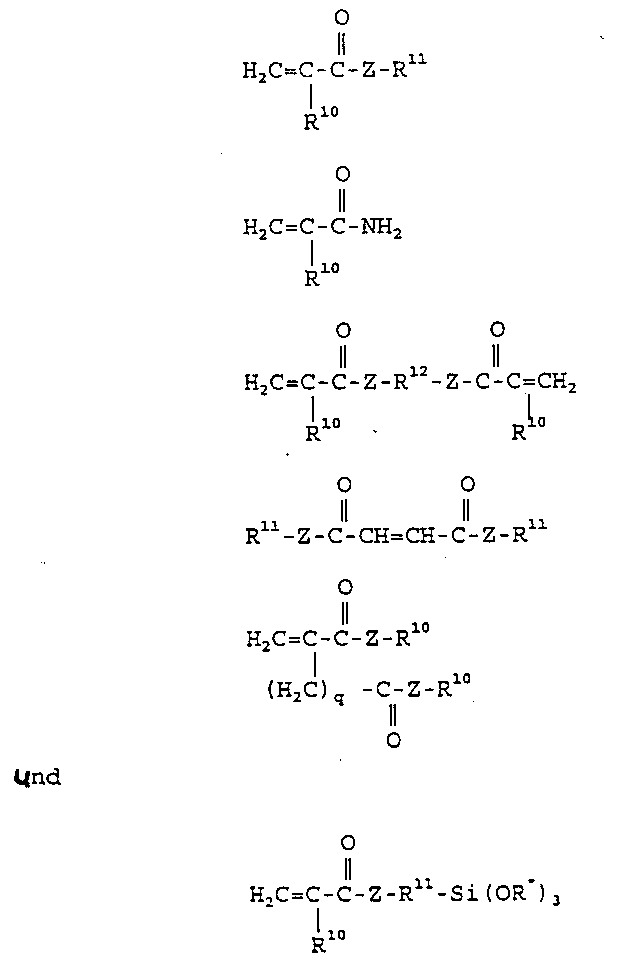 worin
R* wie oben definiert ist,
R¹⁰ ein Wasserstoffatom oder eine Methylgruppe ist,
R¹¹ eine Alkyl- oder Alkenylgruppe ist,
R¹² eine Alkylgruppe, eine Alkenylgruppe oder eine [(CH₂)ₙO]ₓ-(H₂C)ₙ-Gruppe ist, worin n 2-4 und x 1-6 ist,
q gleich 1 oder 0 ist und
Z ein Sauerstoffatom, NH, NR* oder NR¹¹ ist, worin R* und R¹¹ wie oben definiert sind,
(c) einem Lösungsmittel ausgewählt aus Methanol, Ethanol, Isopropanol und einer Mischung daraus, und wahlweise
(d) einem Zusatz ausgewählt aus Si(OR*)₄ oder einem Teilhydrolysat davon und R¹¹-Si(OR*)₃, worin R¹¹ und R* wie oben definiert sind.

2. Mehrschichtiger Verbundfilm nach Anspruch 1, worin die Schichten in der Reihenfolge CBABC vorliegen.

3. Mehrschichtiger Verbundfilm nach Anspruch 2, worin eine Klebschicht (D) zwischen Schicht (A) und einer der Schichten (B) vorhanden ist.

4. Mehrschichtiger Verbundfilm nach Anspruch 1, worin die Schichten in der Reihenfolge BCACB vorliegen.

5. Mehrschichtiger Verbundfilm nach Anspruch 1, worin die Schichten in der Reihenfolge BCABC vorliegen.

6. Mehrschichtiger Verbundfilm nach einem der vorstehenden Ansprüche, worin das Lösungsmittel der Silanlösung (2) ausgewählt ist aus Alkohol und Keton.

7. Mehrschichtiger Verbundfilm nach einem der vorstehenden Ansprüche, worin die Silanlösung (2) Wasser enthält.

8. Mehrschichtiger Verbundfilm nach einem der vorstehenden Ansprüche, worin das erste und zweite Kunststoffsubstrat (B) Polyolefin ist.

9. Mehrschichtiger Verbundfilm nach einem der vorstehenden Ansprüche, worin die Kernschicht eine Dicke im Bereich von 2-25 µm aufweist.

10. Mehrschichtiger Verbundfilm nach einem der vorstehenden Ansprüche, worin die Kunststoffsubstrate (B) jeweils eine Dicke von mindestens 25 µm aufweisen.

11. Mehrschichtiger Verbundfilm nach einem der vorstehenden Ansprüche, worin die Siliconharzdeckschichten (C) eine Dicke im Bereich von 0,5-5 µm aufweisen.

12. Verbundfilm mit einer Schicht (B) aus einem Kunststoffsubstrat und einer Schicht (C) aus einem Siliconharz, welches auf einer Seite des Kunststoffsubstrats (B) angeordnet ist, wobei das Siliconharz aus einer wie in Anspruch 1 definierten Silanlösung (3) abgeleitet ist.

13. Verfahren zur Herstellung eines mehrschichtigen Verbundfilms nach Anspruch 2 oder 3, umfassend die Schritte:
Beschichten einer ersten Seite eines ersten Kunststoffsubstrats (B) mit einer Kernschicht (A) aus Polyvinylalkohol, dann Trocknen derselben,
Anordnung eines zweiten Kunststoffsubstrats (B) auf der Kernschicht (A) auf der beschichteten Seite des ersten Kunststoffsubstrats (B), um einen dreischichtigen Film mit erster und zweiter Seite auszubilden,
Beschichten der ersten und zweiten Seite dieses dreischichtigen Films mit einer Silanlösung wie in Anspruch 1 definiert in der Gegenwart von Wasser und
Härten der Silanlösung, um einen mehrschichtigen Verbundfilm, der mit einem gehärteten Siliconharz beschichtet ist, auszubilden.

14. Verfahren nach Anspruch 13, umfassend den zusätzlichen Schritt des Aussetzens der ersten und zweiten Seite des dreischichtigen Films einer Koronarbehandlung vor der Beschichtung der Silanlösung.

15. Verfahren nach Anspruch 13 oder 14, umfassend den zusätzlichen Schritt des Aussetzens der ersten Seite des ersten Kunststoffsubstrats (B) einer Koronarbehandlung vor der Beschichtung des ersten Kunststoffsubstrats mit Polyvinylalkohol.

16. Verfahren nach einem der Ansprüche 13-15, worin das zweite Substrat auf einer ersten Seite mit einer Kernschicht aus Polyvinylalkohol beschichtet wird und der Polyvinylalkohol getrocknet wird und die Beschichtung vor der Anordnung des zweiten Substrats auf der Kernschicht des ersten Substrats stattfindet.

17. Verfahren nach einem der Ansprüche 13-16, umfassend den zusätzlichen Schritt der Trocknung des mehrschichtigen Verbundfilms.

18. Verfahren zur Herstellung eines mehrschichtigen Verbundfilms nach Anspruch 4, umfassend die Schritte:
Beschichten einer ersten Seite eines ersten Kunststoffsubstrats (B) mit einer Schicht aus einer Silanlösung in der Gegenwart von Wasser,
Beschichten einer ersten Seite eines zweiten Kunststoffsubstrats (B) mit einer Schicht aus einer Silanlösung in der Gegenwart von Wasser,
Trocknen des ersten und zweiten Kunststoffsubstrats (B), um die Silanlösungen in Siliconharze umzuwandeln,
Beschichten der ersten Seite des ersten Kunststoffsubstrats mit Polyvinylalkohol, um eine Kernschicht auf dem ersten Kunststoffsubstrat auszubilden,
Trocknen des ersten Kunststoffsubstrats und
Verbinden der ersten Seite des zweiten Substrats mit der Kernschicht des ersten Substrats, um einen mehrschichtigen Verbundfilm auszubilden.

19. Verfahren zur Herstellung eines mehrschichtigen Verbundfilms nach Anspruch 5, umfassend die Schritte:
Beschichten einer ersten Schicht eines ersten Kunststoffsubstrats mit einer Schicht aus einer Silanlösung in der Gegenwart von Wasser,
Beschichten einer ersten Seite eines zweiten Kunststoffsubstrats mit einer Schicht aus einer Silanlösung in der Gegenwart von Wasser,
Trocknen des ersten und zweiten Kunststoffsubstrats, um die Silanlösungen in ein Siliconharz umzuwandeln,
Beschichten einer zweiten Seite des ersten Substrats mit Polyvinylalkohol,
Trocknen des ersten und zweiten Substrats und
Laminieren der ersten Seite des zweiten Substrats mit der zweiten Seite des ersten Substrats, um einen mehrschichtigen Verbundfilm auszubilden.

20. Verwendung eines mehrschichtigen Verbundfilms nach einem der Ansprüche 1-11 für eine Lebensmittelverpackung.

21. Verwendung eines mehrschichtigen Verbundfilms nach einem der Ansprüche 1-11 zur Anordnung im Inneren oder auf der Außenseite einer Lebensmittelverpackung, die eine Tragschicht aus Karton oder Kunststoff aufweist.

22. Verwendung eines mehrschichtigen Verbundfilms nach einem der Ansprüche 1-11 in Kombination mit einer Tragschicht aus Kunststoff oder Karton.

23. Verwendung eines mehrschichtigen Verbundfilms nach einem der Ansprüche 1-11 bei der Verpackung von sauerstoffempfindlichen Dichtmaterialien.

24. Verwendung eines Verbundfilms nach Anspruch 12, um die Eigenschaften einer Geschmacks-/Aromasperre zur Verfügung zu stellen.

25. Geschmacks- und Aromasperrfilm, enthaltend einen Verbundfilm nach Anspruch 12.

## Revendications

1. Un film composite multicouche comprenant :
une couche centrale (A) en alcool polyvinylique de faible perméabilité aux gaz,
deux couches (B) de substrat en matière plastique, disposées de chaque côté de la couche (A) et
deux couches (C) d'une résine de silicone, disposées d'un côté de chacune des couches (B), dans lequel la résine de silicone est obtenue à partir d'une solution de silane(s) choisie parmi
(1) 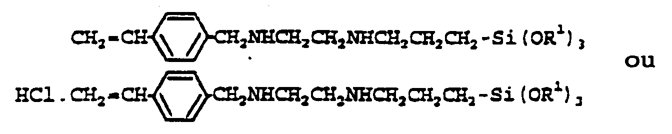 dans un mélange eau/alcool, où R¹ est un radical alkyle comptant 1 à 4 atomes de carbone
(2) la solution comprenant (a) un silane répondant à la formule générale RSi(OR¹)₃, où R est un groupe méthyle ou phényle et où R¹ répond à la même définition que précédemment, (b) un solvant et (c) un silane répondant à la formule générale R²Si(OR³)₃; où R³ est un radical alkyle comptant 1 à 4 atomes de carbone et R² est choisi parmi (i) R⁴HN(CH₂)ₐ-, où R⁴ est H ou un radical alkyle comptant 1 à 4 atomes de carbone et a est un nombre entier entre 3 et 8 inclusivement et (ii) H₂N(CH₂)_{b} NH(CH₂)_{c}-, où b est un nombre entier entre 2 et 8 inclusivement et c est un nombre entier entre 3 et 8 inclusivement et
(3) la solution obtenue à partir du mélange des réactifs suivants :
(a) un silane répondant à la formule 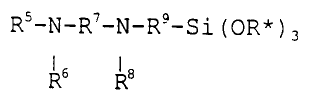 où R* est un radical hydrocarboné comptant 1 à 4 atomes de carbone, R⁵, R⁶ et R⁸ sont choisis parmi l'atome d'hydrogène et les radicaux méthyle et éthyle, l'un au moins des radicaux R⁵, R⁶ et R⁸ étant un atome d'hydrogène, R⁷ est un radical hydrocarboné comptant 2 à 4 atomes de carbone inclusivement et R⁹ est un radical hydrocarboné comptant 3 à 6 atomes de carbone inclusivement,
(b) un acrylate choisi individuellement parmi 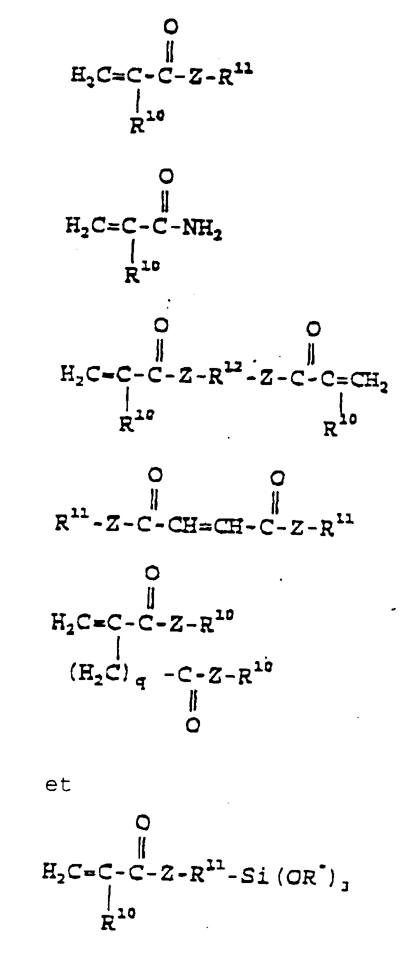 où
R* répond à la même définition que précédemment,
R¹⁰ est un atome d'hydrogène ou un groupe méthyle,
R¹¹ est un groupe alkyle ou alcényle,
R¹² est un groupe alkyle, un groupe alcényle ou un groupe [(CH₂)ₙO]ₓ-(H₂C)ₙ, où n vaut 2 à 4 et x vaut 1 à 6,
q est 1 ou 0, et
Z est un atome d'oxygène ou un groupe NH, NR* ou NR¹¹, où
R* et R¹¹ répondent aux mêmes définitions que plus haut,
(c) un solvant choisi parmi le méthanol, l'éthanol, l'isopropanol et un mélange de ceux-ci, et, facultativement
(d) un additif choisi parmi Si(OR*)₄ ou un hydrolysat partiel de celui-ci et R¹¹-Si(OR*)₃ où R¹¹ et R* sont tels que définis ci-dessus.

2. Un film composite multicouche selon la revendication 1, dans lequel les couches se succèdent dans l'ordre CBABC.

3. Un film composite multicouche selon la revendication 2, dans lequel une couche adhésive (D) est présente entre la couche (A) et l'une des couches (B).

4. Un film composite multicouche selon la revendication 1, dans lequel les couches se succèdent dans l'ordre BCACB.

5. Un film composite multicouche selon la revendication 1, dans lequel les couches se succèdent dans l'ordre BCABC.

6. Un film composite multicouche selon l'une quelconque des revendications précédentes, dans lequel le solvant de la solution de silane(s) (2) est choisi parmi les alcools et les cétones.

7. Un film composite multicouche selon l'une quelconque des revendications précédentes, dans lequel la solution de silane(s) (2) renferme de l'eau.

8. Un film composite multicouche selon l'une quelconque des revendications précédentes, dans lequel les premier et deuxième substrats en matière plastique (B) sont en polyoléfines.

9. Un film composite multicouche selon l'une quelconque des revendications précédentes, dans lequel ladite couche centrale présente une épaisseur se situant dans l'intervalle de 2 à 25 µm.

10. Un film composite multicouche selon l'une quelconque des revendications précédentes, dans lequel les substrats en matière plastique (B) ont chacun une épaisseur d'au moins 25 µm.

11. Un film composite multicouche selon l'une quelconque des revendications précédentes, dans lequel les couches de revêtement de résine de silicone (C) ont une épaisseur se situant dans l'intervalle de 0,5 à 5 µm.

12. Un film composite comportant une couche (B) d'un substrat en matière plastique et une couche (C) d'une résine de silicone disposée d'un côté du substrat en matière plastique (B), dans lequel la résine de silicone dérive d'une solution de silane(s) du type (3) défini dans la revendication 1.

13. Un procédé de production d'un film composite multicouche selon la revendication 2 ou 3, comprenant les opérations consistant à revêtir une première face d'un premier substrat en matière plastique (B) d'une couche centrale (A) en alcool polyvinylique, puis à en effectuer le séchage ;
à disposer un deuxième substrat en matière plastique (B) sur ladite couche centrale (A) sur la face revêtue dudit premier substrat en matière plastique (B) pour former un film à trois couches présentant une première et une seconde faces ;
à revêtir lesdites première et seconde faces dudit film à trois couches d'une solution de silane(s) telle que définie dans la revendication 1, en présence d'eau ; et
à faire durcir la solution de silane(s) pour former un film composite multicouche revêtu de résine de silicone durcie.

14. Un procédé selon la revendication 13, comprenant l'opération supplémentaire d'exposition desdites première et seconde faces dudit film à trois couches à un traitement d'effluvage électrostatique avant revêtement avec ladite solution de silane(s).

15. Un procédé selon la revendication 13 ou 14, comprenant l'opération supplémentaire d'exposition de ladite première face dudit premier substrat en matière plastique (B) à un traitement d'effluvage électrostatique avant de revêtir d'alcool polyvinylique ledit premier substrat en matière plastique.

16. Un procédé selon l'une quelconque des revendications 13 à 15, dans lequel une première face dudit deuxième substrat est revêtue d'une couche centrale d'alcool polyvinylique et ledit alcool polyvinylique est séché et ledit revêtement a lieu avant la disposition dudit deuxième substrat sur ladite couche centrale dudit premier substrat.

17. Un procédé selon l'une quelconque des revendications 13 à 16, comprenant l'opération supplémentaire de séchage dudit film composite multicouche.

18. Un procédé de production d'un film composite multicouche selon la revendication 4, comprenant les opérations consistant à revêtir une première face d'un premier substrat en matière plastique (B) d'une couche de solution de silane en présence d'eau ;
à revêtir une première face d'un deuxième substrat en matière plastique (B) d'une couche de solution de silane en présence d'eau ;
à sécher lesdits premier et deuxième substrats en matière plastique (B) pour transformer les solutions de silane en résines de silicone ;
à revêtir d'alcool polyvinylique ladite première face dudit premier substrat en matière plastique pour former une couche centrale sur ledit premier substrat en matière plastique ;
à sécher ledit premier substrat en matière plastique ; et
à solidariser ladite première face dudit deuxième substrat à ladite couche centrale dudit premier substrat pour former un film composite multicouche.

19. Un procédé de production d'un film composite multicouche selon la revendication 5, comprenant les opérations consistant à revêtir une première face d'un premier substrat en matière plastique d'une couche de solution de silane en présence d'eau ;
à revêtir une première face d'un deuxième substrat en matière plastique d'une couche de solution de silane en présence d'eau ;
à sécher lesdits premier et deuxième substrats en matière plastique pour transformer la solution de silane en une résine de silicone ;
à revêtir d'alcool polyvinylique une seconde face dudit premier substrat ;
à sécher lesdits premier et deuxième substrats ; et
à stratifier ladite première face dudit deuxième substrat à ladite seconde face dudit premier substrat pour former un film composite multicouche.

20. L'utilisation d'un film composite multicouche selon l'une quelconque des revendications 1 à 11 pour l'emballage de denrées alimentaires.

21. L'utilisation d'un film composite multicouche selon l'une quelconque des revendications 1 à 11 pour montage sur l'intérieur ou l'extérieur d'emballage de denrées alimentaires qui a une couche de structure en matière plastique ou carton.

22. L'utilisation d'un film composite multicouche selon l'une quelconque des revendications 1 à 11 en combinaison avec une couche de structure en matière plastique ou en carton.

23. L'utilisation d'un film composite multicouche selon l'une quelconque des revendications 1 à 11 dans l'emballage d'agents d'étanchéité sensibles à l'oxygène.

24. L'utilisation d'un film composite multicouche selon la revendication 12 pour fournir des caractéristiques de retenue de saveur/arôme.

25. Un film de retenue de saveur et d'arôme comprenant un film composite selon la revendication 12.
